# EUROPEAN PATENT APPLICATION

(11) **EP 4 108 329 A1**
(43) Date of publication of application: **28.12.2022**
(21) Application number: 20920560.8
(22) Date of filing: 02.12.2020
(51) Int. Cl.: B01J 47/00, B01J 47/12, C02F 1/42

(54) **ION EXCHANGE EQUIPMENT**

(30) Priority: 18.02.2020 JP 2020024851
(71) Applicant: Kabushiki Kaisha F.C.C., Hamamatsu-shi, Shizuoka 431-1394 (JP)
(72) Inventor: INO Kentaro, Hamamatsu-shi, Shizuoka 431-1304 (JP); HIGUCHI Hironori, Hamamatsu-shi, Shizuoka 431-1304 (JP); ENDO Makiko, Hamamatsu-shi, Shizuoka 431-1304 (JP)
(74) Representative: Cohausz & Florack
(86) International application number: PCT/JP2020/044922
(87) International publication number: WO 2021/166368

(57) **Abstract**

Provided is an ion-exchange apparatus capable of increasing an ion-exchange capacity without requiring an expensive ion exchanger, and capable of increasing the amount of impurity ions removed while the amount of a treatment material permeated into a raw-water section is reduced. The ion-exchange apparatus includes a raw-water tank 1 containing a liquid to be treated, the liquid being composed of a liquid that contains impurity ions, a treatment tank 2 containing a treatment material that contains exchange ions composed of ions exchangeable with the impurity ions, and an ion exchanger 3 that permits the passage of the impurity ions from the raw-water tank 1 to the treatment tank 2 and the passage of the exchange ions from the treatment tank 2 to the raw-water tank 1, in which a voltage-applying means E capable of applying a voltage to the ion exchanger 3 is provided.

## Description

### Technical Field

The present invention relates to an ion-exchange apparatus capable of removing impurity ions from a liquid to be treated.

### Background Art

Various ion-exchange apparatuses have recently been reported for softening industrial water, producing pure water, purifying drinking water, cooling water for vehicles, and so forth by removing impurity ions in liquids to be treated. For example, ion-exchange apparatuses packed with ion-exchange resins that are ion exchangers formed into granular shapes have been reported. For example, as disclosed in Patent Literatures 1 and 2, hitherto, apparatuses have been disclosed for adsorbing and removing impurity ions by packing a granular ion-exchange resin into a container and passing a liquid to be treated through the container.

### Citation List

### Patent Literature

PTL 1: Japanese Unexamined Patent Application Publication No. S62-14948
PTL 2: Japanese Unexamined Patent Application Publication No. 2002-136968

### Summary of Invention

### Technical Problem

However, in the above-described known techniques, ion-exchange capacities are as small as about 1.5 to about 2 meq/cm³. Thus, when higher performance is required, there are problems that, for example, expensive ion-exchange resins are needed, thereby increasing production costs, and that large holding members for holding ion-exchange resins are required, thereby increasing the whole sizes of ion-exchange apparatuses.

To reduce the size of such an apparatus without requiring an expensive ion-exchange resin, the present applicant has studied an ion-exchange apparatus including a raw-water section containing a liquid to be treated, the liquid being composed of a liquid that contains impurity ions, a treatment section containing a treatment material that contains exchange ions composed of ions exchangeable with the impurity ions, and an ion exchanger that permits passage of the impurity ions from the raw-water section to the treatment section and passage of the exchange ions from the treatment section to the raw-water section.

The ion-exchange apparatus can satisfactorily remove impurity ions in the raw-water section by interposing the ion exchanger between the raw-water section and the treatment section. It is anticipated, however, that there will be a further demand for increasing the amount of impurity ions removed while the amount of the treatment material that permeates from the treatment section into the raw-water section is reduced. Thus, the applicant has conducted intensive studies on an ion-exchange apparatus that can also satisfy the requirements.

The present invention has been made in view of the foregoing circumstances. It is an object of the present invention to provide an ion-exchange apparatus capable of increasing an ion-exchange capacity without requiring an expensive ion exchanger, and capable of increasing the amount of impurity ions removed while the amount of treatment material permeated into a raw-water section is reduced.

### Solution to Problem

According to an invention described in Claim 1, an ion-exchange apparatus includes a raw-water section containing a liquid to be treated, the liquid being composed of a liquid that contains impurity ions, a treatment section containing a treatment material that contains exchange ions composed of ions exchangeable with the impurity ions, and an ion exchanger that permits passage of the impurity ions from the raw-water section to the treatment section and passage of the exchange ions from the treatment section to the raw-water section, in which the ion-exchange apparatus further includes a voltage-applying means capable of applying a voltage to the ion exchanger, in which when the impurity ions in the raw-water section are cations, the voltage-applying means applies a voltage such that the ion exchanger serves as a negative electrode, and when the impurity ions in the raw-water section are anions, the voltage-applying means applies a voltage such that the ion exchanger serves as a positive electrode.

According to an invention described in Claim 2, in the ion-exchange apparatus according to Claim 1, the ion exchanger includes an electrode on the ion exchanger, a counter electrode is disposed at the raw-water section containing the liquid to be treated, and a voltage is applied using the ion exchanger itself as an electrode.

According to an invention described in Claim 3, in the ion-exchange apparatus according to Claim 1 or 2, the exchange ions are composed of group 1 element ions or hydroxide ions.

According to an invention described in Claim 4, in the ion-exchange apparatus according to any one of Claims 1 to 3, the ion-exchange apparatus includes a first treatment section in which the exchange ions are composed of group 1 element ions, and a second treatment section in which the exchange ions are hydroxide ions, in which each of the first treatment section and the second treatment section is connected to the raw-water section with the ion exchanger provided therebetween, and the voltage-applying means applies a voltage such that the ion exchanger of the first treatment section serves as a negative electrode and such that the ion exchanger of the second treatment section serves as a positive electrode.

According to an invention described in Claim 5, in the ion-exchange apparatus according to any one of Claims 1 to 4, the voltage-applying means is set in such a manner that a current is 0.01 A or less when a voltage is applied to the ion exchanger.

According to an invention described in Claim 6, in the ion-exchange apparatus according to any one of Claims 1 to 5, the treatment material in the treatment section has a higher molarity than the liquid to be treated in the raw-water section.

According to an invention described in Claim 7, in the ion-exchange apparatus according to Claim 6, the treatment material in the treatment section has a molarity of 2 mol/L or more.

According to an invention described in Claim 8, in the ion-exchange apparatus according to any one of Claims 1 to 7, the raw-water section is capable of allowing the liquid to be treated to flow.

According to an invention described in Claim 9, in the ion-exchange apparatus according to any one of Claims 1 to 8, the treatment section is provided with a stirring means capable of stirring the treatment material.

According to an invention described in Claim 10, in the ion-exchange apparatus according to any one of Claims 1 to 9, the raw-water section is packed with an ion exchanger in contact with the ion exchanger that permits passage of the impurity ions from the raw-water section to the treatment section and passage of the exchange ions from the treatment section to the raw-water section.

According to an invention described in Claim 11, in the ion-exchange apparatus according to Claim 10, the ion exchanger packed in the raw-water section is composed of ion-exchange fibers.

According to an invention described in Claim 12, in the ion-exchange apparatus according to any one of Claims 1 to 11, a sealing means that seals at least one of a joint portion between the raw-water section and the ion exchanger and a joint portion between the treatment section and the ion exchanger is disposed.

According to an invention described in Claim 13, in the ion-exchange apparatus according to any one of Claims 1 to 12, the ion exchanger is disposed on a support composed of a sheet-like fiber layer.

### Advantageous Effects of Invention

According to the present invention, the ion-exchange apparatus includes the raw-water section containing the liquid to be treated, the liquid being composed of the liquid that contains impurity ions, the treatment section containing the treatment material that contains the exchange ions composed of the ions exchangeable with the impurity ions, and the ion exchanger that permits the passage of the impurity ions from the raw-water section to the treatment section and the passage of the exchange ions from the treatment section to the raw-water section, in which the ion-exchange apparatus further includes the voltage-applying means capable of applying a voltage to the ion exchanger, in which when the impurity ions in the raw-water section are cations, the voltage-applying means applies a voltage such that the ion exchanger serves as the negative electrode, and when the impurity ions in the raw-water section are anions, the voltage-applying means applies a voltage such that the ion exchanger serves as the positive electrode. Thus, it is possible to increase the ion-exchange capacity without requiring an expensive ion exchanger, and to increase the amount of impurity ions removed while the amount of treatment material permeated into the raw-water section is reduced.

### Brief Description of Drawings

[Fig. 1] Fig. 1 is a schematic view illustrating an ion-exchange apparatus according to a first embodiment of the present invention.
[Fig. 2] Fig. 2 is a graph illustrating a technical effect of the ion-exchange apparatus.
[Fig. 3] Fig. 3 is a schematic view illustrating another ion-exchange apparatus according to the embodiment.
[Fig. 4] Fig. 4 is a schematic view illustrating another ion-exchange apparatus according to the embodiment.
[Fig. 5] Fig. 5 is a schematic view illustrating another ion-exchange apparatus according to the embodiment.
[Fig. 6] Fig. 6 is a schematic view illustrating another ion-exchange apparatus according to the embodiment.
[Fig. 7] Fig. 7 is a schematic view illustrating another ion-exchange apparatus according to the embodiment.
[Fig. 8] Fig. 8 is a schematic view illustrating an ion-exchange apparatus according to a second embodiment of the present invention.
[Fig. 9] Fig. 9 is a schematic view illustrating an ion-exchange apparatus according to a third embodiment of the present invention.
[Fig. 10] Fig. 10 is a schematic view illustrating an ion-exchange apparatus according to another embodiment of the present invention.
[Fig. 11] Fig. 11 is a schematic view illustrating an ion-exchange apparatus according to a fourth embodiment of the present invention.
[Fig. 12] Fig. 12 is a schematic view illustrating an ion-exchange apparatus according to another embodiment of the present invention.
[Fig. 13] Fig. 13 is a table presenting experimental results in Examples 1 to 7 and Comparative examples 1 and 2 according to the present invention.
[Fig. 14] Fig. 14 is a table presenting experimental results in Examples 8 to 12 and Comparative example 3 according to the present invention.
[Fig. 15] Fig. 15 is a table presenting experimental results in Examples 8 to 12 and Comparative example 3 according to the present invention.
[Fig. 16] Fig. 16 is a table presenting experimental results in Examples 13 to 17 according to the present invention.
[Fig. 17] Fig. 17 is a table presenting experimental results in Examples 18 and 19 according to the present invention.

### Description of Embodiments

Embodiments of the present invention will be specifically described below with reference to the drawings.

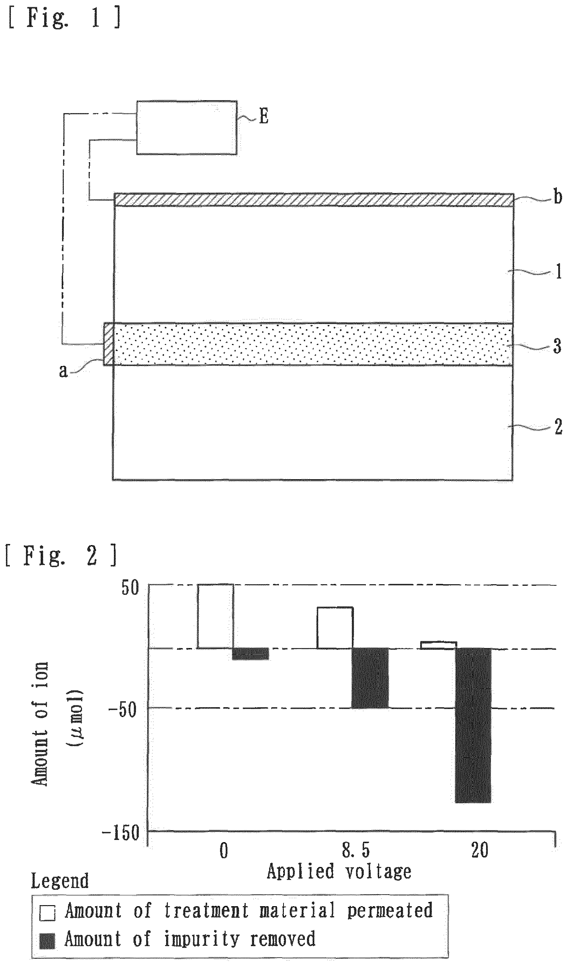

An ion-exchange apparatus according to this embodiment is used to soften industrial water, produce pure water, or purify, for example, drinking water and cooling water for vehicles by removing impurity ions in liquids to be treated. An example of an ion-exchange apparatus according to a first embodiment is, as illustrated in Fig. 1, an ion-exchange apparatus including a raw-water tank 1 (raw-water section), a treatment tank 2 (treatment section), an ion exchanger 3, and a voltage-applying means E.

The raw-water tank 1 is a section containing a liquid to be treated, the liquid containing impurity ions. Examples of the liquid to be treated include solutions containing K⁺ (potassium ion) and Na⁺ (sodium ion) as impurity cations and solutions containing CO₃²⁻ (carbonate ion) and Cl- (chloride ion) as impurity anions. The raw-water tank 1 according to the present embodiment contains a predetermined volume of a liquid to be treated (water to be treated) containing these impurity cations and impurity anions.

The treatment tank 2 is a section containing a treatment material (liquid in the present embodiment) that contains exchange ions exchangeable with impurity ions. Examples thereof include acid-containing solution tanks and alkali-containing solution tanks. In the case of an acid-containing solution tank, for example, a solution containing H⁺ (hydrogen ion) as an exchange ion (specifically, a solution containing Cl-in addition to H⁺ as an exchange ion) is contained. In the case of an alkali-containing solution tank, for example, a solution containing OH⁻ (hydroxide ion) as an exchange ion (specifically, a solution containing Na⁺ in addition to OH⁻ as an exchange ion) is contained.

The ion exchanger 3 permits the passage of impurity ions from the raw-water tank 1 to the treatment tank 2 or the passage of exchange ions from the treatment tank 2 to the raw-water tank 1. For example, an ion-exchange resin, a chelating resin, phosphogypsum, Nafion, zeolite, hydrotalcite, or a metal oxide can be used. The ion exchanger 3 according to the present embodiment is disposed between the raw-water tank 1 and the treatment tank 2 and has a flat-film shape. When impurity ions are cations, a cation exchanger is used and functions by allowing only impurity ions and exchangeable cations in the treatment material to pass therethrough mutually. When impurity ions are anions, an anion exchanger is used and functions by allowing only impurity ions and exchangeable anions in the treatment material to pass therethrough mutually. In this way, impurity ions can be removed from the raw water.

In the ion-exchange apparatus according to the present embodiment, the solution (treatment material) in the treatment tank 2 has a higher molarity than the liquid to be treated in the raw-water tank 1. That is, the concentration (molarity) of the exchange ions in the treatment tank 2 is set higher than that of the impurity ions in the liquid to be treated in the raw-water tank 1. Thus, when the impurity ions are adsorbed by the ion exchanger 3, the impurity ions move in the ion exchanger 3 because of the concentration difference and are released into the treatment tank 2, and the exchange ions in the treatment tank 2 move in the ion exchanger 3 and are released into the raw-water tank 1.

That is, when impurity ions in the raw-water tank 1 come into contact with the ion exchanger 3 because of the concentration difference or ion selectivity, the impurity ions are replaced with ions of the ion exchanger 3, and the ions are sequentially replaced up to a portion of the ion exchanger 3 on the treatment tank 2 side. In this way, the impurity ions coming into contact with the ion exchanger 3 pass through the ion exchanger 3 from the raw-water tank 1 toward the treatment tank 2. The impurity ions are then replaced with the exchange ions in the treatment tank 2 and move into the treatment tank 2 because of a high molarity (exchange ion concentration) in the treatment tank 2. Thereby, the impurity ions in the raw-water tank 1 can be removed.

For example, an ion-exchange apparatus will be described in which a membrane-like ion exchanger 3 (anion exchanger) represented by a structural formula containing OH⁻ is used, a solution containing Cl⁻ as an impurity ion (anion) is contained in the raw-water tank 1, and a treatment material containing exchange ions, such as Na⁺ and OH⁻, is contained in the treatment tank 2. In this case, Cl⁻ as an impurity ion in the raw-water tank 1 is replaced with OH- in the ion exchanger 3 and taken into the ion exchanger 3, and then the taken impurity ions (Cl⁻) are sequentially replaced with OH⁻ ions in the ion exchanger 3 because of ion selectivity (characteristics in which ions having a higher valence or a larger atomic or molecular size are more easily exchanged).

In the present embodiment, the treatment material in the treatment tank 2 has a higher molarity than the liquid to be treated in the raw-water tank 1, so that the impurity ions (Cl⁻) taken into the ion exchanger 3 are replaced with the exchange ions (OH⁻) in the treatment tank 2. Thereby, the impurity ions (CI-) in the raw-water tank 1 are moved to the treatment tank 2 and removed. Na⁺, which is a cation, repels N⁺ in the ion exchanger 3 and thus does not readily move into the raw-water tank 1.

When the treatment tank 2 contains a solution containing an acid, anions in the raw-water tank 1 repel anions, such as sulfonic groups, in the ion exchanger 3 (cation exchanger) and cannot pass through the ion exchanger 3. When the treatment tank 2 contains a solution containing an alkali, cations in the raw-water tank 1 repel cations, such as quaternary ammonium groups, in the ion exchanger 3 (anion exchanger) and cannot pass through the ion exchanger 3.

As described above, the ion exchanger 3 according to the present embodiment is formed of a membrane-like member having the properties of blocking the passage of ions with different electric charges and different signs and allowing the passage of only ions with the same electric charge and the same sign, and is configured for the purpose of filtering impurity ions. The ion exchanger 3 that allows only cations to pass therethrough is referred to as a positive ion-exchange membrane (cation-exchange membrane). The ion exchanger 3 that allows only anions to pass therethrough is referred to as a negative ion-exchange membrane (anion-exchange membrane).

Thus, the pressure in the raw-water tank 1 is preferably higher than the pressure in the treatment tank 2 (i.e., the liquid pressure of the liquid to be treated in the raw-water tank 1 is higher than the pressure of the solution in the treatment tank 2). In this case, it is possible to suppress the passage of ions that are contained in the treatment tank 2 and that are not desired to be moved into the raw-water tank 1 through the ion exchanger 3. For example, the liquid to be treated is allowed to flow in the raw-water tank 1, and the pressure in the raw-water tank 1 can be higher than the pressure in the treatment tank 2 by the flow resistance.

The ion-exchange apparatus according to the present embodiment includes the voltage-applying means E capable of applying a voltage to the ion exchanger 3, in which when the impurity ions in the raw-water section 1 are cations, the voltage-applying means E applies a voltage such that the ion exchanger 3 serves as a negative electrode, and when the impurity ions in the raw-water tank 1 are anions, the voltage-applying means E applies a voltage such that the ion exchanger 3 serves as a positive electrode.

Specifically, the voltage-applying means E is composed of a means, such as a battery, capable of allowing a direct current to flow and includes a connection terminal a connected to the ion exchanger 3 and a connection terminal b connected to a portion of the raw-water tank 1 facing the ion exchanger 3. The ion exchanger 3 in the present embodiment functions, in whole or in part, as an electrode to which a voltage can be applied by the voltage-applying means E. When the conductive ion exchanger 3 is used, the connection terminal a may be disposed on the outer peripheral edge portion thereof.

When the impurity ions in the raw-water tank 1 are cations, a voltage is applied by the voltage-applying means E in such a manner that the connection terminal a serves as a negative electrode and the connection terminal b serves as a positive electrode. The impurity ions in the raw-water tank 1 are attracted to the ion exchanger 3 serving as a negative electrode and easily exchanged. At the same time, anions (ions having a sign different from the exchange ions) in the treatment tank 2 are repelled by the ion exchanger 3 serving as the negative electrode. Thereby, the passage of the cations to the raw-water tank 1 side is inhibited.

When the impurity ions in the raw-water tank 1 are anions, a voltage is applied by the voltage-applying means E in such a manner that the connection terminal a serves as a positive electrode and the connection terminal b serves as a negative electrode. The impurity ions in the raw-water tank 1 are attracted to the ion exchanger 3 serving as a positive electrode and easily exchanged. At the same time, cations (ions having a sign different from the exchange ions) in the treatment tank 2 are repelled by the ion exchanger 3 serving as the positive electrode. Thereby, the passage of the cations to the raw-water tank 1 side is inhibited.

When the ion-exchange apparatus was used to remove impurity ions from the raw-water tank 1, the experimental results illustrated in Fig. 2 were obtained by operating the voltage-applying means E to apply a voltage. Specifically, it was found that in the case where voltages of 0 (V), 8.5 (V), and 20(V) were applied to the ion exchanger 3, as the voltage increases, the amount of the treatment material permeated (the amount of ions, having a sign different from the exchange ions in the treatment tank 2, to the raw-water tank 1) decreased, and the amount of impurities removed (the amount of impurity ions exchanged in the raw-water tank 1) increased. It was found that the voltage-applying means E was preferably set in such a manner that a current was 0.01 A or less when a voltage was applied to the ion exchanger 3.

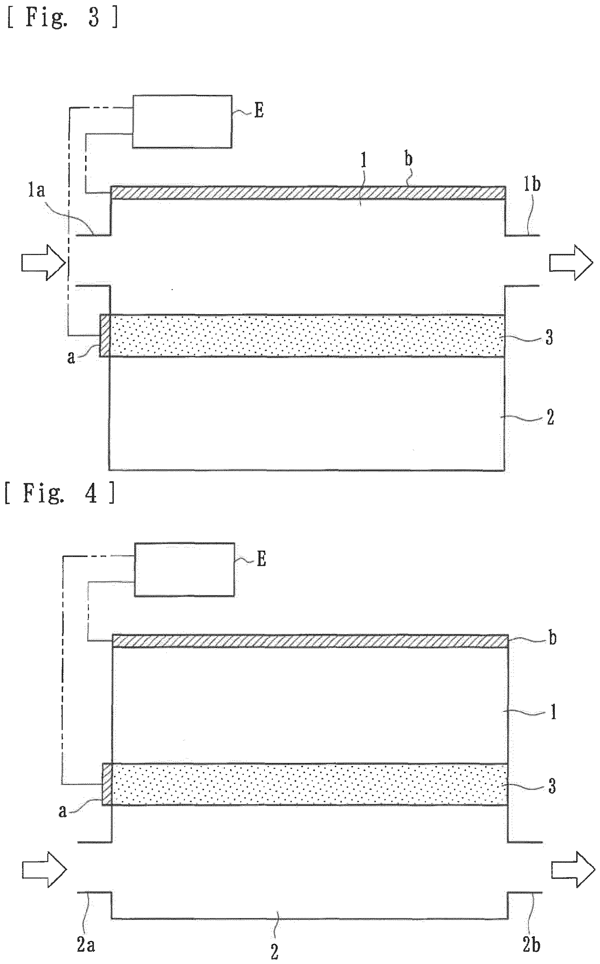

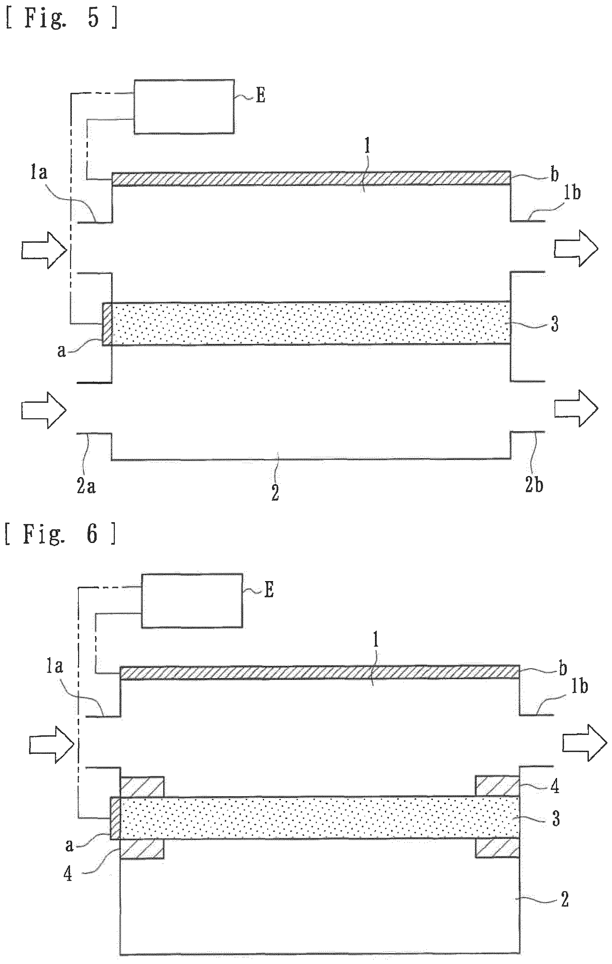

The liquid to be treated in the raw-water tank 1 and the solution (treatment material) in the treatment tank 2 according to the present embodiment are in a non-flowing state. As illustrated in Fig. 3, the raw-water tank 1 may include an inlet 1a and an outlet 1b to allow the liquid to be treated in the raw-water tank 1 to flow. As illustrated in Fig. 4, the treatment tank 2 may include an inlet 2a and an outlet 2b to allow the solution (treatment material) in the treatment tank 2 to flow. As illustrated in Fig. 5, the raw-water tank 1 may include the inlet 1a and the outlet 1b to allow the liquid to be treated to flow, and the treatment tank 2 may include the inlet 2a and the outlet 2b to allow the treatment material to flow. When only the liquid to be treated is allowed to flow, the impurity ions can be continuously removed with a simple configuration, which is preferred.

As illustrated in Fig. 6, sealing means 4, such as gaskets, may be provided at a joint portion between the raw-water tank 1 (raw-water section) and the ion exchanger 3 and at a joint portion between the treatment tank 2 (treatment section) and the ion exchanger 3. In this case, it is sufficient that the sealing means 4 is disposed in at least one of the joint portion between the raw-water tank 1 (raw-water section) and the ion exchanger 3 and the joint portion between the treatment tank 2 (treatment section) and the ion exchanger 3.

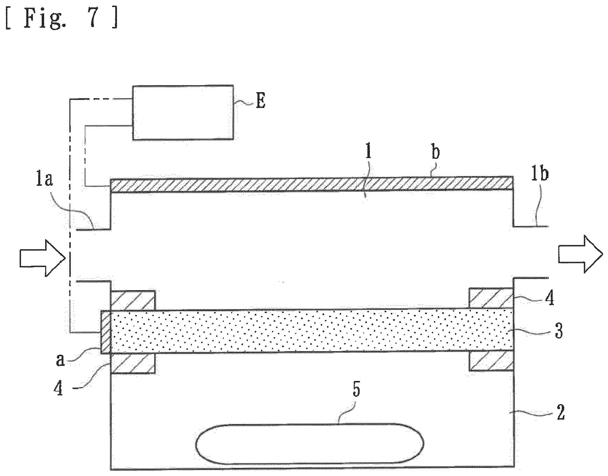

As illustrated in Fig. 7, the treatment tank 2 (treatment section) may be provided with a stirring means 5, such as an impeller, capable of stirring the solution (treatment material). In this case, the impurity ions that have passed through the ion exchanger 3 from the liquid to be treated in the raw-water tank 1 and have reached the treatment tank 2 are mixed in the solution (treatment material) and then stirred with the stirring means 5, thereby enabling a further improvement in ion-exchange efficiency.

In the ion-exchange apparatus according to the present embodiment, the solution (treatment material) in the treatment tank 2 preferably has a molarity of 2 mol/L or more. A molarity of 2 mol/L or more results in an ion-exchange apparatus having a higher ion-exchange capacity than existing ion-exchange resins. The exchange ions in the treatment tank 2 are preferably composed of group 1 element ions or hydroxide ions, and may contain a weak acid or a weak base. The ion exchanger 3 may be composed of an ion-exchange resin membrane or a double-network gel or may be disposed on a support composed of a sheet-like fiber layer.

The double-network gel (DN gel) is composed of a polymer having a three-dimensional network structure insoluble in various solvents and a swollen body thereof and is composed of a gel having high-strength and low-friction performance. More specifically, the double-network gel is composed of a hard brittle strong electrolyte gel and a soft neutral gel, which are interpenetrated, and has a mutually independent double polymer network structure. The use of the double-network gel is preferred because the ion exchanger has high strength and does not break easily.

Preferably, the sheet-like fiber layer as a support is composed of cellulose fibers and has a thickness dimension of, for example, 0.05 mm or more and 0.3 mm or less, preferably about 0.15 mm. More specifically, the fiber layer is preferably obtained by using pulp, such as cellulose, or PET fibers with high water resistance as a material and forming the material into a sheet-like (paper-like) shape by a sheet-making method (paper-making method).

A second embodiment according to the present invention will be described below.

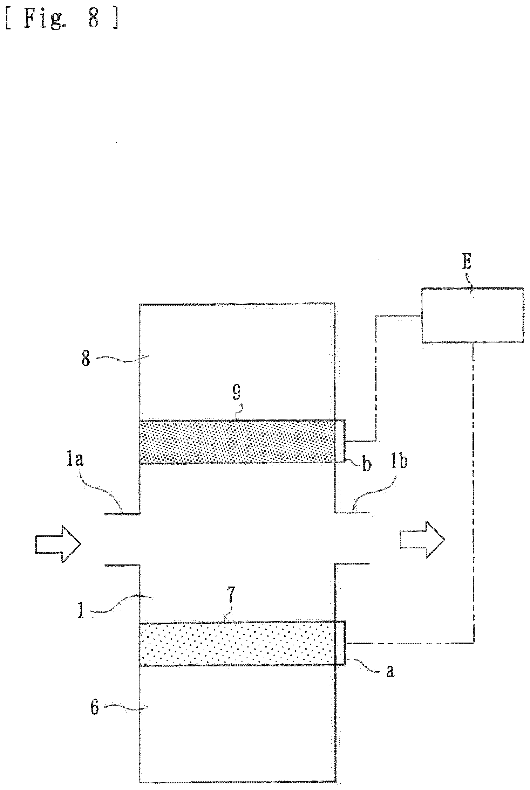

As with the first embodiment, an ion-exchange apparatus according to this embodiment is used to soften industrial water, produce pure water, or purify, for example, drinking water or cooling water for vehicles by removing impurity ions in liquids to be treated, and, as illustrated in Fig. 8, includes the raw-water tank 1, a first treatment tank 6 (first treatment section), a cation exchanger 7, a second treatment tank 8 (second treatment section), an anion exchanger 9, and a voltage-applying means E.

The raw-water tank 1 according to the present embodiment includes the inlet 1a and the outlet 1b in such a manner that a liquid to be treated can flow. As with the first embodiment, in the raw-water tank 1, a solution containing K⁺ (potassium ion) and Na⁺ (sodium ion) as impurity cations or a solution containing CO₃²⁻ (carbonate ion) and Cl⁻ (chloride ion) as impurity anions is contained and flows. However, the types of impurity ions are not limited to these.

The first treatment tank 6 is a section containing a solution (treatment material) that contains exchange ions composed of group 1 element ions, for example, a solution that contains H⁺ (hydrogen ion) serving as an exchange ion (specifically, a solution that contains Cl⁻ in addition to H⁺ serving as the exchange ion). The second treatment tank 8 is a section containing a solution (treatment material) that contains exchange ions composed of hydroxide ions, for example, a solution that contains OH⁻(hydroxide ion) serving as an exchange ion (specifically, a solution that contains Na⁺ in addition to OH⁻ serving as the exchange ion).

The first treatment tank 6 and the second treatment tank 8 communicate with the raw-water tank 1 with the ion exchangers (the cation exchanger 7 and the anion exchanger 9, respectively) provided therebetween. The cation exchanger 7 and the anion exchanger 9 are similar to the ion exchanger 3 in the first embodiment and permit the passage of impurity ions from the raw-water tank 1 to the first treatment tank 6 and the second treatment tank 8 or the passage of exchange ions from the first treatment tank 6 and the second treatment tank 8 to the raw-water tank 1.

In the ion-exchange apparatus according to the present embodiment, each of the solution (treatment material) in the first treatment tank 6 and the solution (treatment material) in the second treatment tank 8 has a higher molarity than the liquid to be treated in the raw-water tank 1. That is, the concentration (molarity) of the exchange ions contained in each of the first treatment tank 6 and the second treatment tank 8 is set higher than that of the impurity ions in the liquid to be treated contained in the raw-water tank 1. Thus, when the impurity ions are adsorbed by the cation exchanger 7 and the anion exchanger 9, the impurity ions move in the cation exchanger 7 and the anion exchanger 9 because of the concentration difference and are released into the first treatment tank 6 and the second treatment tank 8. The exchange ions in the first treatment tank 6 and the second treatment tank 8 move in the cation exchanger 7 and the anion exchanger 9 and are released into the raw-water tank 1.

That is, on the first treatment tank 6 side, when impurity ions in the raw-water tank 1 come into contact with the cation exchanger 7, the impurity ions are replaced with ions of the cation exchanger 7, and the ions are sequentially replaced up to a portion of the cation exchanger 7 adjacent to the first treatment tank 6 because of the concentration difference and ion selectivity. Thus, the impurity ions that have come into contact with the cation exchanger 7 pass through the cation exchanger 7 from the raw-water tank 1 toward the first treatment tank 6, are replaced with the exchange ions in the first treatment tank 6 and move into the first treatment tank 6 because of a high molarity (exchange ion concentration) in the first treatment tank 6. In this way, impurities (cationic impurities) in the raw-water tank 1 can be moved into the first treatment tank 6 and removed.

On the second treatment tank 8 side, when impurity ions in the raw-water tank 1 come into contact with the anion exchanger 9, the impurity ions are replaced with ions of the anion exchanger 9, and the ions are sequentially replaced up to a portion of the anion exchanger 9 adjacent to the second treatment tank 8 because of ion selectivity. Thus, the impurity ions that have come into contact with the anion exchanger 9 pass through the anion exchanger 9 from the raw-water tank 1 toward the second treatment tank 8, are replaced with the exchange ions in the second treatment tank 8, and move into the second treatment tank 8 because of a high molarity (exchange ion concentration) in the second treatment tank 8. In this way, impurities (anionic impurities) in the raw-water tank 1 can be moved into the second treatment tank 8 and removed.

On the first treatment tank 6 side, anions in the raw-water tank 1 repel anions, such as sulfonic groups, in the cation exchanger 7 and cannot pass through the cation exchanger 7. On the second treatment tank 8 side, the cations in the raw-water tank 1 repel cations, such as quaternary ammonium groups, in the anion exchanger 9 and cannot pass through the anion exchanger 9.

The ion-exchange apparatus according to the present embodiment includes the voltage-applying means E capable of applying a voltage to the cation exchanger 7 and the anion exchanger 9. The voltage-applying means E includes a connection terminal a disposed at the cation exchanger 7 and a connection terminal b disposed at the anion exchanger 9 and can apply a voltage such that the cation exchanger 7 serves as a negative electrode and such that the ion exchanger 9 serves as a positive electrode.

Thus, the impurity ions composed of cations in the raw-water tank 1 are attracted to the cation exchanger 7 serving as a negative electrode and easily exchanged. At the same time, the anions (ions having a sign different from the exchange ions) in the first treatment tank 6 are repelled by the cation exchanger 7 serving as a negative electrode. Thereby, the passage of the anions to the raw-water tank 1 side is inhibited. The impurity ions composed of anions in the raw-water tank 1 are attracted to the anion exchanger 9 serving as a positive electrode and easily exchanged. At the same time, the cations (ions having a sign different from the exchange ions) in the second treatment tank 8 are repelled by the anion exchanger 9 serving as a positive electrode. Thereby, the passage of the cations to the raw-water tank 1 side is inhibited.

Thus, the pressure in the raw-water tank 1 is preferably higher than the pressure in the first treatment tank 6 and the second treatment tank 8 (i.e., the liquid pressure of the liquid to be treated in the raw-water tank 1 is higher than the pressure of the solution of each of the first treatment tank 6 and the second treatment tank 8). In this case, it is possible to suppress the passage of ions that are contained in the first treatment tank 6 and the second treatment tank 8 and that are not desired to be moved into the raw-water tank 1 through the cation exchanger 7 and the anion exchanger 9. For example, when the liquid to be treated flows in the raw-water tank 1, the pressure in the raw-water tank 1 can be higher than the pressure in the first treatment tank 6 and the second treatment tank 8 by the flow resistance.

As illustrated in Fig. 6 in the first embodiment, the sealing means 4, such as gaskets, may be provided at joint portions between the raw-water tank 1 (raw-water section) and the cation exchanger 7 and between the raw-water tank 1 (raw-water section) and the anion exchanger 9, and at joint portions between the first treatment tank 6 and the cation exchanger 7 and between the second treatment tank 8 and the anion exchanger 9. In this case, as in the first embodiment, it is preferable to dispose the sealing means 4 at at least one or both of the joint portion between the raw-water tank 1 (raw-water section) and the cation exchanger 7 and between the raw-water tank 1 (raw-water section) and the anion exchanger 9 and the joint portion between the first treatment tank 6 and the cation exchanger 7 and between the second treatment tank 8 and the anion exchanger 9.

As illustrated in Fig. 7 in the first embodiment, the first treatment tank 6 and the second treatment tank 8 may be provided with the stirring means 5, such as impellers, capable of stirring the solutions (treatment materials). In this case, the impurity ions that have passed through the cation exchanger 7 and the anion exchanger 9 from the liquid to be treated in the raw-water tank 1 and have reached the first treatment tank 6 and the second treatment tank 8 are mixed in the solution (treatment material) and then stirred with the stirring means 5, thereby enabling a further improvement in ion-exchange efficiency.

In the ion-exchange apparatus according to the present embodiment, each of the solutions (treatment materials) in the treatment tanks 6 and 8 preferably has a molarity of 2 mol/L or more. The exchange ions in the treatment tanks 6 and 8 are preferably composed of group 1 element ions or hydroxide ions, and may contain a weak acid or a weak base. Each of the cation exchanger 7 and the anion exchanger 9 may be composed of, for example, an ion-exchange resin membrane, a chelating resin, phosphogypsum, Nafion, zeolite, hydrotalcite, a metal oxide, or a double-network gel, or may be disposed on a support composed of a sheet-like fiber layer.

According to the above-described embodiment, the ion-exchange apparatus includes the raw-water tank 1 containing a liquid to be treated, the liquid being composed of a liquid that contains impurity ions, the treatment tank (2, 6, 8) containing a treatment material that contains exchange ions composed of ions exchangeable with the impurity ions, and the ion exchanger (3, 7, 9) that permits the passage of the impurity ions from the raw-water tank 1 to the treatment tank (2, 6, 8) and the passage of the exchange ions from the treatment tank (2, 6, 8) to the raw-water tank 1, in which the ion-exchange apparatus further includes the voltage-applying means (E) capable of applying a voltage to the ion exchanger (3, 7, 9), in which when the impurity ions in the raw-water tank 1 are cations, the voltage-applying means (E) applies a voltage such that the ion exchanger (3, 7) serves as a negative electrode, and when the impurity ions in the raw-water tank 1 are anions, the voltage-applying means (E) applies a voltage such that the ion exchanger (3, 9) serves as a positive electrode. Thus, it is possible to increase the ion-exchange capacity without requiring an expensive ion exchanger, and to increase the amount of impurity ions removed while the amount of treatment material permeated into the raw-water tank 1 is reduced.

According to the above-described embodiment, the ion-exchange apparatus includes the raw-water tank containing a liquid to be treated, the liquid being composed of a liquid that contains impurity ions, the treatment tank (including the first treatment tank and the second treatment tank) containing a treatment material that contains exchange ions composed of ions exchangeable with the impurity ions, and the ion exchanger (including the cation exchanger and the anion exchanger) that permits the passage of the impurity ions from the raw-water tank to the treatment tank and the passage of the exchange ions from the treatment tank to the raw-water tank, in which the treatment material in the treatment tank has a higher molarity than the liquid to be treated in the raw-water tank. Thus, it is possible to provide the inexpensive ion-exchange apparatus without using a large amount of an expensive ion exchanger. Additionally, the amount (density) of the exchangeable ions in the treatment material is larger than those of existing ion-exchange resins, thus enabling an increase in ion-exchange capacity per volume.

A third embodiment according to the present invention will be described below.

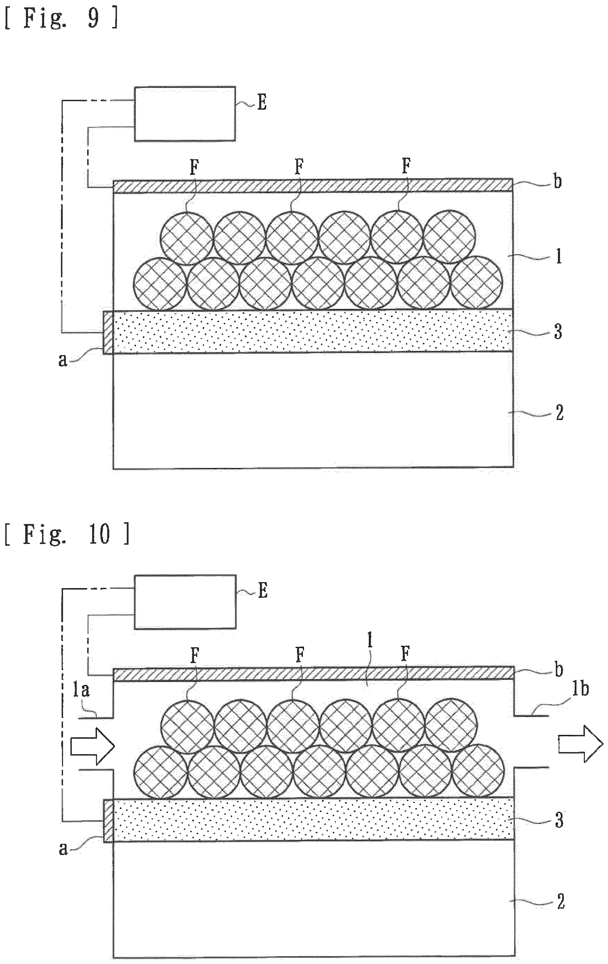

As with the above-described embodiment, an ion-exchange apparatus according to this embodiment is used to soften industrial water, produce pure water, or purify, for example, drinking water or cooling water for vehicles by removing impurity ions in liquids to be treated, and, as illustrated in Fig. 9, the raw-water tank 1 contains a packed ion exchanger F in contact with the ion exchanger 3. The packed ion exchanger F has the same composition and properties as those of the ion exchanger 3, has a spherical shape, and can ensure a large surface area.

That is, the packed ion exchanger F is packed into the raw-water tank 1 to adsorb impurity ions in the liquid to be treated and allows the impurity ions to pass through the packed ion exchanger F and to move to the ion exchanger 3 in contact therewith owing to the difference in concentration between the inside and the outside thereof. The impurity ions thus moved to the ion exchanger 3 can be removed by allowing the impurity ions to pass through the inside of the ion exchanger 3 to the treatment tank 2. In this case, as illustrated in Fig. 10, the raw-water tank 1 may include the inlet 1a and the outlet 1b in such a manner that the liquid to be treated is allowed to flow in a cavity packed with the spherical packed ion exchanger F.

In the ion-exchange apparatus according to the present embodiment, the raw-water tank 1 is packed with the ion exchanger F in contact with the ion exchanger 3. The ion exchanger F plays the same role as the ion exchanger 3, adsorbs impurity ions and allows the impurity ions to pass through the inside of the ion exchanger F and to move to the ion exchanger 3 owing to the concentration difference. After that, the impurity ions can be moved to the treatment tank 2 through the inside of the ion exchanger 3. The ion exchanger F can have a spherical or fiber shape and can have a larger surface area than the ion exchanger 3, thereby enabling efficient removal of the impurity ions from the raw water. In particular, in the case of the fiber shape, it is preferable to use a sheet shape, such as nonwoven fabric, because the entanglement of the fibers provides wide paths through which the impurity ions are moved to the ion exchanger 3, and thus high ion exchange velocity can be obtained.

A fourth embodiment according to the present invention will be described below.

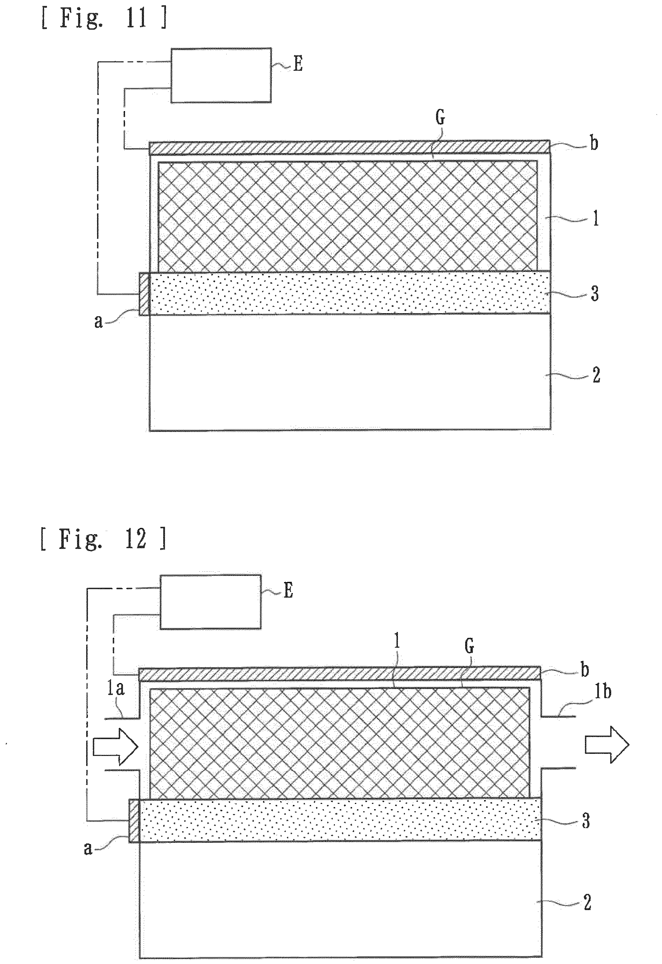

As with the above-described embodiment, an ion-exchange apparatus according to this embodiment is used to soften industrial water, produce pure water, or purify, for example, drinking water or cooling water for vehicles by removing impurity ions in liquids to be treated, and, as illustrated in Fig. 11, the raw-water tank 1 contains a packed ion exchanger G in contact with the ion exchanger 3. The packed ion exchanger G has the same composition and properties as those of the ion exchanger 3, has a fibrous shape, and can ensure a larger surface area.

That is, the packed ion exchanger G is packed into the raw-water tank 1 to adsorb impurity ions in the liquid to be treated and allows the impurity ions to pass through the packed ion exchanger G and to move to the ion exchanger 3 in contact therewith owing to the difference in concentration between the inside and the outside thereof. In particular, the movement path of the impurity ions can be widely secured by the entanglement of fibers. The impurity ions thus moved to the ion exchanger 3 can be removed by allowing the impurity ions to pass through the inside of the ion exchanger 3 to the treatment tank 2. In this case, as illustrated in Fig. 12, the raw-water tank 1 may include the inlet 1a and the outlet 1b in such a manner that the liquid to be treated is allowed to flow in a cavity packed with the fibrous packed ion exchanger G.

The experimental results exhibiting the technical superiority of the present invention will be described below using examples and comparative examples.

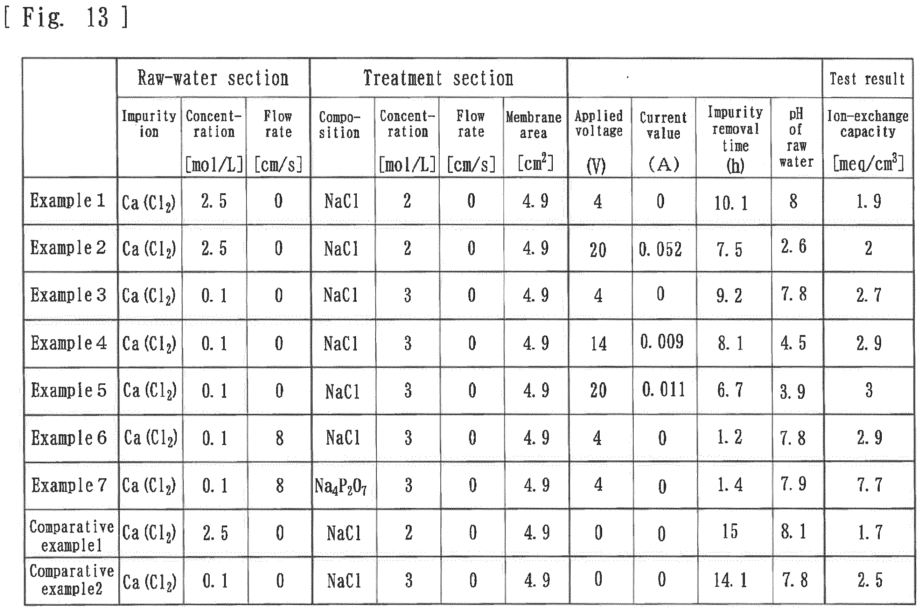

### (Regarding Examples 1 to 7 and Comparative Examples 1 and 2: See Figs. 1 and 13)

One raw-water tank and one treatment tank were provided, and an ion exchanger (cation exchanger) was arranged between the raw-water tank and the treatment tank. Specifically, the ion exchanger 3 was processed into a circular shape having a diameter of ø 60 mm. A CR-2800 Ag paste, available from Kaken Tech Co., Ltd., was applied to an outer peripheral edge portion so as to have a width of 5 mm, and dried at 70°C for 1 hour, thereby forming an electrode.

A solution having a predetermined ion concentration was prepared. Then 150 ml of the solution was placed in a glass container measuring ø 51 mm in diameter × 76 mm (internal volume: 150 ml) and having opening portions with a diameter of ø 25 mm (two opening portions arranged at opposite positions) and used as raw water (liquid to be treated). A cation exchanger was disposed at one of the opening portions with ring-shaped butyl rubber (outside diameter: ø 50 mm, internal diameter: ø 26 mm, and thickness: 0.1 mm) provided therebetween, and a stainless steel plate electrode was disposed at the other opening portion with similar butyl rubber provided therebetween.

The same glass container as described above was then stacked on the portion where the cation exchanger was disposed with ring-shaped butyl rubber (outside diameter: ø 50 mm, inside diameter: ø 26 mm, thickness: 0.1 mm) provided therebetween. A pressure was applied with a clamp to prevent leakage of the liquid. The container was filled with 150 ml of a treatment material and covered with a lid. As the ion exchanger, a Selemion CMVN cation-exchange membrane, available from AGC Inc., was used. A voltage-applying means (DC power supply device) was connected in such a manner that the electrode on the CMVN served as a negative electrode and the stainless steel plate served as a positive electrode. A predetermined voltage was applied, and a current was measured.

After the application of the voltage in this way, the impurity ion concentrations in the liquid to be treated (raw water) and the treatment material were measured every hour with an ion chromatograph (940 Professional IC Vario, available from Metrohm AG) until no change was observed. When exchangeable ions remained in the treatment material, the liquid to be treated (raw water) was replaced. The measurement was repeated until no change was observed in the concentration of ions in the treatment material exchangeable with impurity ions in the liquid to be treated. Thereby, the ion-exchange capacity was calculated from the amount of impurity ions in the treatment material.

The time required to remove impurity ions was calculated by extrapolating the time required to reach zero on the basis of the ion concentration measured every hour. The pH in the treated liquid after the test was measured with a pH meter. Other conditions were described in Fig. 13, and the test was performed. Examples 1 and 2 and Comparative example 1 indicate that a higher applied voltage results in a shorter time required to remove the impurity ions from the liquid to be treated and also results in a higher ion-exchange capacity. This is thought to be due to the fact that the application of the voltage promoted the migration of the ions and suppressed the permeation of the negative ions through the cation-exchange membrane.

Examples 3, 4, and 5 and Comparative example 2 indicate that a higher applied voltage results in a shorter time required to remove the impurity ions from the liquid to be treated and also results in a higher ion-exchange capacity and that the pH of the treated liquid is not less than 4 when the current value is 0.01 A or less. A pH of less than 4 is not preferable because it facilitates the deterioration of pipes and other components. The reason for this is presumably that when a current flows, chlorine ions are electrolyzed on the negative electrode side to cause the solution to be acidic, but at a current of 0.01 A or less, the acidity of the solution is not significantly increased.

Example 6 is an example in which holes having a diameter of ø 8 mm were formed in a raw-water tank, Teflon (registered trademark) tubes were connected to the holes, and a liquid to be treated was allowed to flow with a pump. Other than the above respects, the test was performed under the same conditions as in Example 3. Examples 3 and 6 indicate that allowing the liquid to be treated to flow shortens the time required to remove the impurity ions. Example 7 is an example in which sodium diphosphate was used as a treatment material. Sodium diphosphate was weighed, and a 3 mol/L solution was prepared. However, a part of the powder remained undissolved, and the treatment material was placed in the treatment tank in a state in which a solid and a liquid were both present. Other than the above respects, the test was performed under the same conditions as in Example 6.

The experimental results obtained in Example 6, 18, and 19 indicated that when the spherical ion exchanger F in contact with the ion exchanger 3 was disposed in the raw-water section, the time required for ion exchange was shortened, and that when the ion exchanger F was composed of ion-exchange fibers, the time required to remove the impurity ions was further shortened.

(Example 1): The concentration of impurity ions CaCl₂ in a liquid to be treated (flow rate: 0 cm/s) was 2.5 (mol/L). The concentration of NaCl as a treatment material (flow rate: 0 cm/s) was 2 (mol/L). An ion exchanger having a membrane area of 4.9 (cm²) was used. A voltage of 4 (V) was applied with a voltage-applying means. The current was set to 0 (A). In this case, the impurity removal time was 10.1 (h). The pH of the raw water (pH of the liquid to be treated) was 8. The ion-exchange capacity was 1.9 (meq/cm³).

(Example 2): The concentration of impurity ions CaCl₂ in a liquid to be treated (flow rate: 0 cm/s) was 2.5 (mol/L). The concentration of NaCl as a treatment material (flow rate: 0 cm/s) was 2 (mol/L). An ion exchanger having a membrane area of 4.9 (cm²) was used. A voltage of 20 (V) was applied with a voltage-applying means. The current was set to 0.052 (A). In this case, the impurity removal time was 7.5 (h). The pH of the raw water (pH of the liquid to be treated) was 2.6. The ion-exchange capacity was 2 (meq/cm³).

(Example 3): The concentration of impurity ions CaCl₂ in a liquid to be treated (flow rate: 0 cm/s) was 0.1 (mol/L). The concentration of NaCl as a treatment material (flow rate: 0 cm/s) was 3 (mol/L). An ion exchanger having a membrane area of 4.9 (cm²) was used. A voltage of 4 (V) was applied with a voltage-applying means. The current was set to 0 (A). In this case, the impurity removal time was 9.2 (h). The pH of the raw water (pH of the liquid to be treated) was 7.8. The ion-exchange capacity was 2.7 (meq/cm³).

(Example 4): The concentration of impurity ions CaCl₂ in a liquid to be treated (flow rate: 0 cm/s) was 0.1 (mol/L). The concentration of NaCl as a treatment material (flow rate: 0 cm/s) was 3 (mol/L). An ion exchanger having a membrane area of 4.9 (cm²) was used. A voltage of 14 (V) was applied with a voltage-applying means. The current was set to 0.009 (A). In this case, the impurity removal time was 8.1 (h). The pH of the raw water (pH of the liquid to be treated) was 4.5. The ion-exchange capacity was 2.9 (meq/cm³).

(Example 5): The concentration of impurity ions CaCl₂ in a liquid to be treated (flow rate: 0 cm/s) was 0.1 (mol/L). The concentration of NaCl as a treatment material (flow rate: 0 cm/s) was 3 (mol/L). An ion exchanger having a membrane area of 4.9 (cm²) was used. A voltage of 20 (V) was applied with a voltage-applying means. The current was set to 0.011 (A). In this case, the impurity removal time was 6.7 (h). The pH of the raw water (pH of the liquid to be treated) was 3.9. The ion-exchange capacity was 3 (meq/cm³).

(Example 6): The concentration of impurity ions CaCl₂ in a liquid to be treated (flow rate: 8 cm/s) was 0.1 (mol/L). The concentration of NaCl as a treatment material (flow rate: 0 cm/s) was 3 (mol/L). An ion exchanger having a membrane area of 4.9 (cm²) was used. A voltage of 4 (V) was applied with a voltage-applying means. The current was set to 0 (A). In this case, the impurity removal time was 1.2 (h). The pH of the raw water (pH of the liquid to be treated) was 7.8. The ion-exchange capacity was 2.9 (meq/cm³).

(Example 7): The concentration of impurity ions CaCl₂ in a liquid to be treated (flow rate: 8 cm/s) was 0.1 (mol/L). The concentration of Na₄P₂O₇ as a treatment material (flow rate: 0 cm/s) was 3 (mol/L). An ion exchanger having a membrane area of 4.9 (cm²) was used. A voltage of 4 (V) was applied with a voltage-applying means. The current was set to 0 (A). In this case, the impurity removal time was 1.4 (h). The pH of the raw water (pH of the liquid to be treated) was 7.9. The ion-exchange capacity was 7.7 (meq/cm³).

(Comparative example 1): The concentration of impurity ions CaCl₂ in a liquid to be treated (flow rate: 0 cm/s) was 2.5 (mol/L). The concentration of NaCl as a treatment material (flow rate: 0 cm/s) was 2 (mol/L). An ion exchanger having a membrane area of 4.9 (cm²) was used. No voltage was applied with a voltage-applying means. In this case, the impurity removal time was 15 (h). The pH of the raw water (pH of the liquid to be treated) was 8.1. The ion-exchange capacity was 1.7 (meq/cm³).

(Comparative example 2): The concentration of impurity ions CaCl₂ in a liquid to be treated (flow rate: 0 cm/s) was 0.1 (mol/L). The concentration of NaCl as a treatment material (flow rate: 0 cm/s) was 3 (mol/L). An ion exchanger having a membrane area of 4.9 (cm²) was used. No voltage was applied with a voltage-applying means. In this case, the impurity removal time was 14.1 (h). The pH of the raw water (pH of the liquid to be treated) was 7.8. The ion-exchange capacity was 2.5 (meq/cm³).

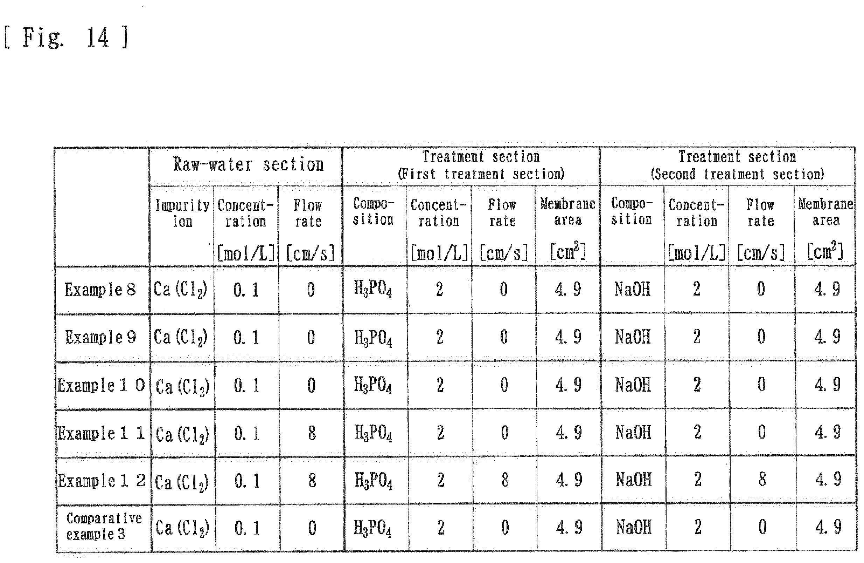

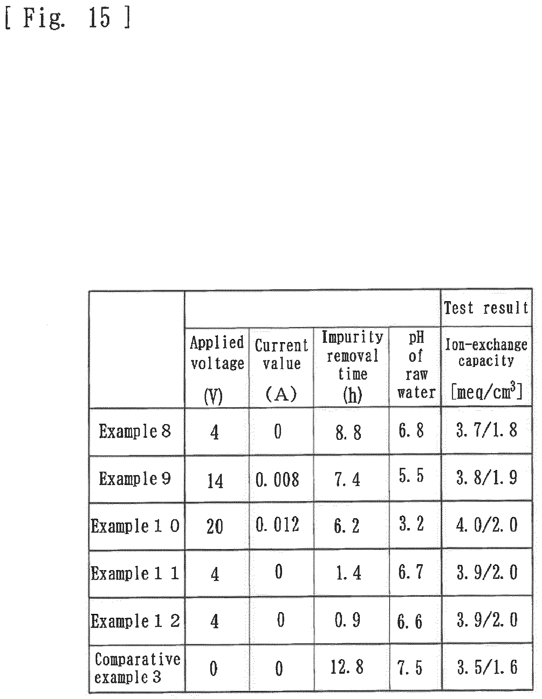

### (Regarding Examples 8 to 12 and Comparative Example 3: See Figs. 8,14, and 15)

One raw-water tank and two treatment tanks were provided, and ion exchangers (a cation exchanger and an anion exchanger) were arranged between the raw-water tank and the treatment tanks. Specifically, each of the cation exchanger (CMVN) and the anion exchanger (AMVN, available from AGC Inc.) was processed into a circular shape having a diameter of ø 60 mm. A CR-2800 Ag paste, available from Kaken Tech Co., Ltd., was applied to an outer peripheral edge portion so as to have a width of 5 mm, and dried at 70°C for 1 hour, thereby forming an electrode.

A glass container measuring ø 51 mm in diameter × 76 mm (internal volume: 150 ml) and having opening portions with a diameter of ø 25 mm (two opening portions arranged at opposite positions) was used. The cation exchanger was disposed at one of the opening portions having a diameter of ø 25 mm with ring-shaped butyl rubber (outside diameter: ø 50 mm, internal diameter: ø 26 mm, and thickness: 0.1 mm) provided therebetween. Similarly, the anion exchanger was disposed at the other opening portion with butyl rubber provided therebetween. Then 150 ml of raw water (liquid to be treated) was placed therein.

The same glass containers as described above were then stacked on portions where the ion exchangers were disposed with ring-shaped butyl rubber provided therebetween. A pressure was applied with clamps to prevent leakage of the liquid. Treatment materials were placed therein in an amount of 150 ml for each container. The containers were covered with lids. A voltage-applying means (DC power supply device) was connected in such a manner that the cation-exchange membrane served as a negative electrode and the anion-exchange membrane served as a positive electrode. A predetermined voltage was applied, and a current was measured. The other conditions were the same as in Example 3.

In Example 11, the test was performed while a liquid to be treated was allowed to flow under the same conditions as in Example 6. In Example 12, holes having a diameter of ø 8 mm were also formed in the treatment tanks. Teflon (registered trademark) tubes were connected thereto. Treatment materials were allowed to flow with pumps. Examples 8, 9, and 10 and Comparative example 3 indicate that a higher applied voltage results in a shorter time required to remove the impurity ions from the liquid to be treated (raw water) and also results in a higher ion-exchange capacity and that the pH of the liquid to be treated is not less than 4 when the current value is 0.01 A or less. Examples 8, 11, and 12 indicate that allowing the liquid to be treated to flow shortens the time required to remove the impurity ions in the liquid to be treated and that, moreover, allowing the treatment materials to flow enables further shortening of the time required to remove the impurity ions.

(Example 8): The concentration of impurity ions CaCl₂ in a liquid to be treated (flow rate: 0 cm/s) was 0.1 (mol/L). The concentration of H₃PO₄ as a treatment material (flow rate: 0 cm/s) in a first treatment section was 2 (mol/L). The concentration of NaOH as a treatment material (flow rate: 0 cm/s) in a second treatment section was 2 (mol/L). Ion exchangers each having a membrane area of 4.9 (cm²) was used. A voltage of 4 (V) was applied with a voltage-applying means. The current was set to 0 (A). In this case, the impurity removal time was 8.8 (h). The pH of the raw water (pH of the liquid to be treated) was 6.8. The ion-exchange capacity of the first treatment section was 3.7 (meq/cm³). The ion-exchange capacity of the second treatment section was 1.8 (meq/cm³).

(Example 9): The concentration of impurity ions CaCl₂ in a liquid to be treated (flow rate: 0 cm/s) was 0.1 (mol/L). The concentration of H₃PO₄ as a treatment material (flow rate: 0 cm /s) in a first treatment section was 2 (mol/L). The concentration of NaOH as a treatment material (flow rate: 0 cm/s) in a second treatment section was 2 (mol/L). Ion exchangers each having a membrane area of 4.9 (cm²) was used. A voltage of 14 (V) was applied with a voltage-applying means. The current was set to 0.008 (A). In this case, the impurity removal time was 7.4 (h). The pH of the raw water (pH of the liquid to be treated) was 5.5. The ion-exchange capacity of the first treatment section was 3.8 (meq/cm³). The ion-exchange capacity of the second treatment section was 1.9 (meq/cm³).

(Example 10): The concentration of impurity ions CaCl₂ in a liquid to be treated (flow rate: 0 cm/s) was 0.1 (mol/L). The concentration of H₃PO₄ as a treatment material (flow rate: 0 cm /s) in a first treatment section was 2 (mol/L). The concentration of NaOH as a treatment material (flow rate: 0 cm/s) in a second treatment section was 2 (mol/L). Ion exchangers each having a membrane area of 4.9 (cm²) was used. A voltage of 20 (V) was applied with a voltage-applying means. The current was set to 0.012 (A). In this case, the impurity removal time was 6.2 (h). The pH of the raw water (pH of the liquid to be treated) was 3.2. The ion-exchange capacity of the first treatment section was 4.0 (meq/cm³). The ion-exchange capacity of the second treatment section was 2.0 (meq/cm³).

(Example 11): The concentration of impurity ions CaCl₂ in a liquid to be treated (flow rate: 8 cm/s) was 0.1 (mol/L). The concentration of H₃PO₄ as a treatment material (flow rate: 0 cm/s) in a first treatment section was 2 (mol/L). The concentration of NaOH as a treatment material (flow rate: 0 cm/s) in a second treatment section was 2 (mol/L). Ion exchangers each having a membrane area of 4.9 (cm²) was used. A voltage of 4 (V) was applied with a voltage-applying means. The current was set to 0 (A). In this case, the impurity removal time was 1.4 (h). The pH of the raw water (pH of the liquid to be treated) was 6.7. The ion-exchange capacity of the first treatment section was 3.9 (meq/cm³). The ion-exchange capacity of the second treatment section was 2.0 (meq/cm³).

(Example 12): The concentration of impurity ions CaCl₂ in a liquid to be treated (flow rate: 8 cm/s) was 0.1 (mol/L). The concentration of H₃PO₄ as a treatment material (flow rate: 8 cm/s) in a first treatment section was 2 (mol/L). The concentration of NaOH as a treatment material (flow rate: 8 cm/s) in a second treatment section was 2 (mol/L). Ion exchangers each having a membrane area of 4.9 (cm²) was used. A voltage of 4 (V) was applied with a voltage-applying means. The current was set to 0 (A). In this case, the impurity removal time was 0.9 (h). The pH of the raw water (pH of the liquid to be treated) was 6.6. The ion-exchange capacity of the first treatment section was 3.9 (meq/cm³). The ion-exchange capacity of the second treatment section was 2.0 (meq/cm³).

(Comparative Example 3): The concentration of impurity ions CaCl₂ in a liquid to be treated (flow rate: 0 cm/s) was 0.1 (mol/L). The concentration of H₃PO₄ as a treatment material (flow rate: 0 cm /s) in a first treatment section was 2 (mol/L). The concentration of NaOH as a treatment material (flow rate: 0 cm/s) in a second treatment section was 2 (mol/L). Ion exchangers each having a membrane area of 4.9 (cm²) was used. No voltage was applied with a voltage-applying means. In this case, the impurity removal time was 12.8 (h). The pH of the raw water (pH of the liquid to be treated) was 7.5. The ion-exchange capacity of the first treatment section was 3.5 (meq/cm³). The ion-exchange capacity of the second treatment section was 1.6 (meq/cm³).

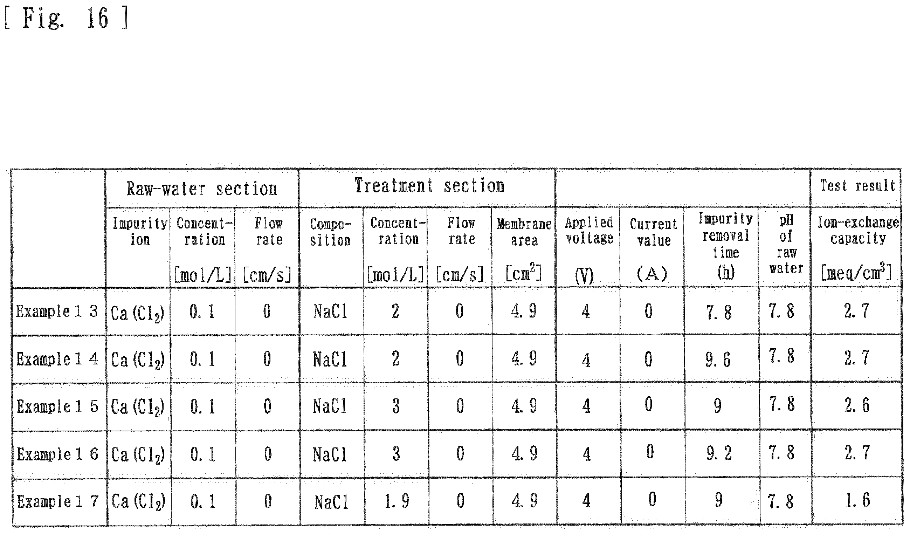

### (Regarding Examples 13 to 17: See Fig. 16)

Example 13 is an example in which a treatment tank was provided with a stirring means to stir a treatment material as illustrated in Fig. 7. The stirring means was 5 mm in diameter, 15 mm in length, composed of a PTFE material, and disposed in the treatment tank. The treatment tank was placed on a magnetic stirrer. The test was performed at a rotational speed of 100 rpm. The other conditions were the same as in Example 3.

Example 14 is an example in which a paper support was used and an ion exchanger was impregnated into the paper. An impregnating solution containing an ion exchanger (2-acrylamido-2-methylpropanesulfonic acid) capable of removing impurity ions, a cross-linking agent (n,n'-methylenebis (acrylamide)), and a photopolymerization initiator (oxoglutaric acid) was prepared. A paper support composed of PET fibers was impregnated with the impregnating solution, and then synthesis was performed. The other conditions were the same as in Example 3. When the paper support was provided as described above, the membrane ion exchanger had increased strength and improved handleability.

Example 15 is an example in which a counter electrode was disposed on the treatment tank side. The test was performed under the same conditions as in Example 3, except that a stainless steel electrode was disposed on a treatment tank. Example 16 is an example in which no sealing member was disposed. The test was performed under the same conditions as in Example 3, except that no sealing member was disposed. Example 17 is an example in which the concentration of a treatment material was 2 mol/L or less. The test was performed under the same conditions as in Example 3, except that the concentration of the treatment material was set to 2 mol/L or less.

(Example 13): The concentration of impurity ions CaCl₂ in a liquid to be treated (flow rate: 0 cm/s) was 0.1 (mol/L). The concentration of NaCl as a treatment material (flow rate: 0 cm/s) was 2 (mol/L). An ion exchanger having a membrane area of 4.9 (cm²) was used. A voltage of 4 (V) was applied with a voltage-applying means. The current was set to 0 (A). In this case, the impurity removal time was 7.8 (h). The pH of the raw water (pH of the liquid to be treated) was 7.8. The ion-exchange capacity was 2.7 (meq/cm³).

(Example 14): The concentration of impurity ions CaCl₂ in a liquid to be treated (flow rate: 0 cm/s) was 0.1 (mol/L). The concentration of NaCl as a treatment material (flow rate: 0 cm/s) was 2 (mol/L). An ion exchanger having a membrane area of 4.9 (cm²) was used. A voltage of 4 (V) was applied with a voltage-applying means. The current was set to 0 (A). In this case, the impurity removal time was 9.6 (h). The pH of the raw water (pH of the liquid to be treated) was 7.8. The ion-exchange capacity was 2.7 (meq/cm³).

(Example 15): The concentration of impurity ions CaCl₂ in a liquid to be treated (flow rate: 0 cm/s) was 0.1 (mol/L). The concentration of NaCl as a treatment material (flow rate: 0 cm/s) was 3 (mol/L). An ion exchanger having a membrane area of 4.9 (cm²) was used. A voltage of 4 (V) was applied with a voltage-applying means. The current was set to 0 (A). In this case, the impurity removal time was 9 (h). The pH of the raw water (pH of the liquid to be treated) was 7.8. The ion-exchange capacity was 2.6 (meq/cm³).

(Example 16): The concentration of impurity ions CaCl₂ in a liquid to be treated (flow rate: 0 cm/s) was 0.1 (mol/L). The concentration of NaCl as a treatment material (flow rate: 0 cm/s) was 3 (mol/L). An ion exchanger having a membrane area of 4.9 (cm²) was used. A voltage of 4 (V) was applied with a voltage-applying means. The current was set to 0 (A). In this case, the impurity removal time was 9.2 (h). The pH of the raw water (pH of the liquid to be treated) was 7.8. The ion-exchange capacity was 2.7 (meq/cm³).

(Example 17): The concentration of impurity ions CaCl₂ in a liquid to be treated (flow rate: 0 cm/s) was 0.1 (mol/L). The concentration of NaCl as a treatment material (flow rate: 0 cm/s) was 1.9 (mol/L). An ion exchanger having a membrane area of 4.9 (cm²) was used. A voltage of 4 (V) was applied with a voltage-applying means. The current was set to 0 (A). In this case, the impurity removal time was 9 (h). The pH of the raw water (pH of the liquid to be treated) was 7.8. The ion-exchange capacity was 1.6 (meq/cm³).

### (Regarding Examples 18 and 19: See Figs. 9, 10, 11, 12, and 17)

The following experimental results obtained in Examples 18 and 19 revealed that the time required for ion exchange was reduced by packing the raw-water tank 1 with a spherical packed ion exchanger F in contact with the ion exchanger 3, and that the time required to remove impurity ions was further reduced by packing the raw-water tank 1 with a fibrous ion exchanger G in place of the spherical ion exchanger F.

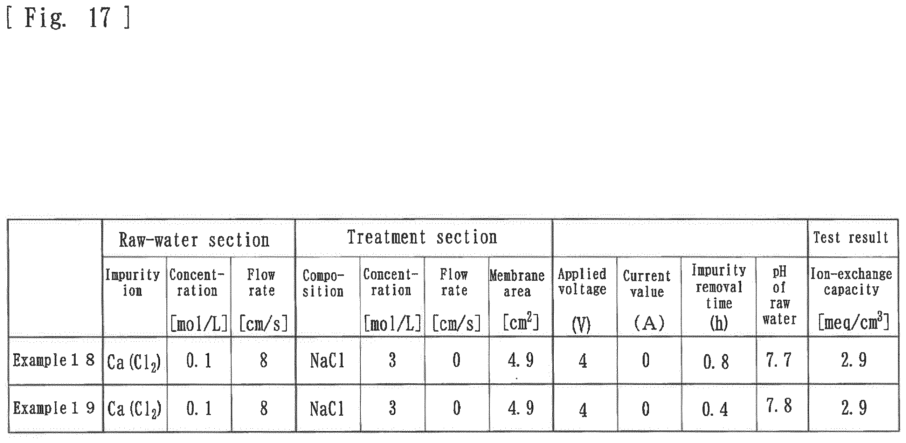

(Example 18): This is an example of a raw-water tank 1 packed with the spherical ion-exchange resin F. A spherical ion exchanger F (ion-exchange resin) having a diameter of about 0.5 mm was packed to a height of 3 mm while in contact with the ion exchanger 3. Other than the above respects, the test was performed in the same manner as in Example 6. The results indicated that, as illustrated in Fig. 17, the ion-exchange capacity was 2.9 (meq/cm³), and the treatment time to reduce impurity ions (Ca ions) in the liquid to be treated to equal to or less than 1 ppm was 0.8 (h).

(Example 19): This is an example of the raw-water tank 1 packed with a fibrous ion exchanger G. The fibrous ion exchanger G (non-woven fabric) was processed into a piece having a diameter of ø 25 mm using Muromac NWF-SC, available from Muromachi Chemicals Inc., and packed while in contact with the ion exchanger 3. Other than the above respects, the test was performed in the same manner as in Example 18. The results indicated that, as illustrated in Fig. 17, the ion-exchange capacity was 2.9 (meq/cm³), and the treatment time to reduce impurity ions (Ca ions) in the liquid to be treated to equal to or less than 1 ppm was 0.4 (h).

While the present embodiment has been described above, the present invention is not limited thereto. For example, the sizes and shapes of the raw-water tank (raw-water section) and the treatment tanks (first treatment tank and second treatment tank) can be variously set. Any liquid to be treated and any treatment material can be used.

### Industrial Applicability

The present invention can also be applied to an ion-exchange apparatus to which another means is added as long as the ion-exchange apparatus includes a voltage-applying means capable of applying a voltage to an ion exchanger, in which when impurity ions in a raw-water section are cations, the voltage-applying means applies a voltage such that the ion exchanger serves as a negative electrode, and when the impurity ions in the raw-water section are anions, the voltage-applying means applies a voltage such that the ion exchanger serves as a positive electrode. Reference Signs List

1 raw-water tank (raw-water section)
1a inlet
1b outlet
2 treatment tank (treatment section)
2a inlet
2b outlet
3 ion exchanger
4 sealing means
5 stirring means
6 first treatment tank (first treatment section)
7 cation exchanger
8 second treatment tank (second treatment section)
9 anion exchanger
E voltage-applying means
a, b connection terminal
F spherical packed ion exchanger
G fibrous packed ion exchanger

## Claims

1. An ion-exchange apparatus comprising:
a raw-water section containing a liquid to be treated, the liquid being composed of a liquid that contains impurity ions;
a treatment section containing a treatment material that contains exchange ions composed of ions exchangeable with the impurity ions; and
an ion exchanger that permits passage of the impurity ions from the raw-water section to the treatment section and passage of the exchange ions from the treatment section to the raw-water section,
wherein the ion-exchange apparatus further comprises a voltage-applying means capable of applying a voltage to the ion exchanger, wherein when the impurity ions in the raw-water section are cations, the voltage-applying means applies a voltage such that the ion exchanger serves as a negative electrode, and when the impurity ions in the raw-water section are anions, the voltage-applying means applies a voltage such that the ion exchanger serves as a positive electrode.

2. The ion-exchange apparatus according to Claim 1, wherein the ion exchanger includes an electrode on the ion exchanger, a counter electrode is disposed at the raw-water section containing the liquid to be treated, and a voltage is applied using a membrane itself as an electrode.

3. The ion-exchange apparatus according to Claim 1 or 2, wherein the exchange ions are composed of group 1 element ions or hydroxide ions.

4. The ion-exchange apparatus according to any one of Claims 1 to 3, wherein the ion-exchange apparatus includes a first treatment section in which the exchange ions are composed of group 1 element ions, and
a second treatment section in which the exchange ions are hydroxide ions, wherein each of the first treatment section and the second treatment section is connected to the raw-water section with the ion exchanger provided therebetween, and the voltage-applying means applies a voltage such that the ion exchanger serves as a negative electrode and such that the ion exchanger serves as a positive electrode.

5. The ion-exchange apparatus according to any one of Claims 1 to 4, wherein the voltage-applying means is set in such a manner that a current is 0.01 A or less when a voltage is applied to the ion exchanger.

6. The ion-exchange apparatus according to any one of Claims 1 to 5, wherein the treatment material in the treatment section has a higher molarity than the liquid to be treated in the raw-water section.

7. The ion-exchange apparatus according to Claim 6, wherein the treatment material in the treatment section has a molarity of 2 mol/L or more.

8. The ion-exchange apparatus according to any one of Claims 1 to 7, wherein the raw-water section is capable of allowing the liquid to be treated to flow.

9. The ion-exchange apparatus according to any one of Claims 1 to 8, wherein the treatment section is provided with a stirring means capable of stirring the treatment material.

10. The ion-exchange apparatus according to any one of Claims 1 to 9, wherein the raw-water section is packed with an ion exchanger in contact with the ion exchanger that permits passage of the impurity ions from the raw-water section to the treatment section and passage of the exchange ions from the treatment section to the raw-water section.

11. The ion-exchange apparatus according to Claim 10, wherein the ion exchanger packed in the raw-water section is composed of ion-exchange fibers.

12. The ion-exchange apparatus according to any one of Claims 1 to 11, wherein a sealing means that seals at least one of a joint portion between the raw-water section and the ion exchanger and a joint portion between the treatment section and the ion exchanger is disposed.

13. The ion-exchange apparatus according to any one of Claims 1 to 12, wherein the ion exchanger is disposed on a support composed of a sheet-like fiber layer.
